# EUROPÄISCHE PATENTANMELDUNG

(11) **EP 1 190 800 A2**
(43) Veröffentlichungstag der Anmeldung: **27.03.2002**
(21) Anmeldenummer: 01120918.6
(22) Anmeldetag: 31.08.2001
(51) Int. Cl.: B23D 61/02

(54) **Sägeblatt mit Sägezähnen unterschiedlicher Teilung**

(30) Priorität: 23.09.2000 DE 10047212
(71) Anmelder: C. & E. Fein Gmbh & Co. KG, 70176 Stuttgart (DE)
(72) Erfinder: Wurst, Bert G., 70329 Stuttgart (DE)
(74) Vertreter: Gahlert, Stefan, Dr.-Ing.

(57) **Zusammenfassung**

Es wird ein Sägeblatt mit einer Befestigungsaufnahme (26a) angegeben zur Befestigung an einer oszillierend antreibbaren Antriebswelle, mit einer von der Befestigungsaufnahme (26a) beabstandeten Schneide (24a), die sich im wesentlichen tangential oder bogenförmig zur Befestigungsaufnahme (26a) erstreckt und mit einer Mehrzahl von Sägezähnen (26a) versehen ist, wobei die Schneide (24a) zumindest einen ersten Abschnitt (12a), sowie einen zweiten Abschnitt (14a) aufweist und die Sägezähne (22a) zumindest im Bereich eines Abschnittes (14a, 16a) eine andere Teilung oder eine andere Schränkung als im anderen Abschnitt (12a) aufweisen. Ein solches Sägeblatt ermöglicht ein präzises Ansetzen am Schneidgut und ein späteres Fortsetzen des Schneidvorgangs mit erhöhtem Vorschub (Fig. 2).

## Beschreibung

Die Erfindung betrifft ein Sägeblatt mit einer Befestigungsaufnahme zur Befestigung an einer oszillierend antreibbaren Antriebswelle, mit einer von der Befestigungsaufnahme beabstandeten Schneide, die sich im wesentlichen tangential oder bogenförmig zu der Befestigungsaufnahme erstreckt und mit einer Mehrzahl von Sägezähnen versehen ist, wobei die Schneide wenigstens einen ersten Abschnitt und einen zweiten Abschnitt aufweist.

Ein derartiges Sägeblatt ist aus der EP 0 881 023 A2 bekannt.

Das bekannte Sägeblatt besitzt eine Schneide, die sich tangential zur Befestigungsaufnahme erstreckt und gegebenenfalls an zwei Seitenabschnitten zusätzlich leicht gegenüber einem mittleren Abschnitt abgewinkelt ist.

Derartige Schneidwerkzeuge lassen sich in Verbindung mit einem oszillierenden Antrieb mit hoher Frequenz in der Größenordnung von etwa 3000 - 25000 Schwingungen pro Minute und mit geringem Verschwenkwinkel von etwa 0,5 - 5° für Spezialaufgaben einsetzen, um beispielsweise rechteckige Ausnehmungen an Holz, Gips oder dergleichen erzeugen zu können. Darüber hinaus sind auch kreisförmige und kreissegmentförmige Sägeblätter bekannt, die gleichfalls in Verbindung mit oszillierenden Antrieben für derartige besondere Schneidaufgaben eingesetzt werden.

Um mit solchen Sägeblättern möglichst saubere Schnitte erzielen zu können, sollte eine möglichst kleine Teilung gewählt werden, so daß das Sägeblatt mit einer Vielzahl von Sägezähnen versehen ist. Dies hat jedoch den Nachteil einer langsameren Arbeitsgeschwindigkeit.

Der Erfindung liegt somit die Aufgabe zugrunde, ein Sägeblatt gemäß der eingangs genannten Art derart zu verbessern, daß möglichst saubere Schnitte erzielbar sind und daß gleichzeitig ein guter Vorschub während des Schnittes gewährleistet ist.

Diese Aufgabe wird bei einem Sägeblatt gemäß der eingangs genannten Art erfindungsgemäß dadurch gelöst, daß die Sägezähne zumindest im Bereich des ersten Abschnittes eine andere Teilung oder eine andere Schränkung als im zweiten Abschnitt aufweisen.

Die Aufgabe der Erfindung wird auf diese Weise vollkommen gelöst.

So kann nämlich die Teilung an einem der beiden Abschnitte feiner gewählt werden als beim anderen Abschnitt, wodurch es ermöglicht wird, das Sägeblatt zunächst zu Beginn eines Schnittes mit einer feinen Teilung arbeiten zu lassen, um so ein sauberes Ansetzen zu erlauben. Sobald der Schnittbeginn ausgeführt ist, kann das Sägeblatt so bewegt werden, daß der andere Abschnitt zum Einsatz kommt, der mit einer gröberen Teilung oder einer breiteren Schränkung versehen ist, so daß nunmehr mit größerem Vorschub gearbeitet werden kann.

Unter dem Begriff "Schränkung" versteht man, daß ein Sägeblatt Sägezähne aufweist, die über beide Außenoberflächen des Sägeblattes hinaus hervorstehen. Die im allgemeinen abwechselnd über die eine Außenfläche und die andere Außenfläche hervorstehenden Sägezähne besitzen somit Seitenkanten, deren größter Abstand voneinander größer als die Stärke des Sägeblattes. Variiert man diese Schränkung, also den Abstand der beiden durch die Sägezähne auf der einen Außenoberfläche und der anderen Außenoberfläche aufgespannten Flächen, so kann man auch hierdurch ein leichtes Ansetzen und einen sauberen Schnittbeginn erreichen, woraufhin anschließend beim Arbeiten mit dem mittleren Abschnitt ein größerer Vorschub erzielt werden kann.

Diese Maßnahme kann selbstverständlich mit einer Variation der Teilung kombiniert werden.

Gemäß einer weiteren Ausführung der Erfindung ist die Schneide kreisbogenförmig gekrümmt und weist einen Krümmungsmittelpunkt auf, der mit der Befestigungsöffnung zusammenfällt. Hierbei kann das Sägeblatt beispielsweise entweder eine kreisförmige, eine kreisabschnittförmige oder eine kreissegmentförmige Grundform aufweisen.

Gemäß einer alternativen Ausführung besitzt das Sägeblatt eine längliche Grundform, wobei die Befestigungsaufnahme im Bereich eines ersten Endes ausgebildet ist und die Schneide am gegenüberliegenden zweiten Ende ausgebildet ist.

Mit einer derartigen Sägeblattform lassen sich Sägearbeiten an schwer zugänglichen Stellen ausführen.

Gemäß einer weiteren Ausführung der Erfindung weist die Schneide mehr als zwei Abschnitte auf, von denen wenigstens zwei eine voneinander abweichende Teilung oder Schränkung aufweisen.

Durch die Aufteilung der Schneide in eine größere Anzahl von Abschnitten kann eine noch günstigere Anpassung an den Schnittfortgang gewährleistet werden, so daß bspw. zu Beginn des Schnittes mit einer besonders feinen Teilung gearbeitet werden kann, um einen sauberen Schnittansatz zu gewährleisten, anschließend mit einer etwas gröberen Teilung und schließlich beim weiteren Schnittfortgang mit einer noch gröberen Teilung, um einen schnellen Vorschub zu gewährleisten.

Gemäß einer weiteren Ausführung der Erfindung weist die Schneide einen ersten, einen zweiten und einen dritten Abschnitt auf, wobei der erste Abschnitt als mittlerer Abschnitt ausgebildet ist, der auf beiden Seiten von dem zweiten und dem dritten Abschnitt eingeschlossen ist.

Mit einer derartigen Form läßt sich das Sägeblatt bei Schnittbeginn beliebig entweder von der einen oder der anderen Seite her ansetzen und anschließend beim Schnittfortgang mit dem mittleren Abschnitt arbeiten.

Vorzugsweise besitzen die Sägezähne im ersten Abschnitt eine feinere Teilung bzw. eine schmalere Schränkung als am zweiten Abschnitt.

Es versteht sich ferner, daß es ausreicht, lediglich einen der beiden Abschnitte im Vergleich zum anderen Abschnitt bezüglich Teilung oder Schränkung abweichend zu gestalten. In diesem Fall wird das Sägeblatt immer von einer Seite her, nämlich in der Regel an dem Abschnitt mit der feineren Teilung bzw. der schmaleren Schränkung angesetzt und anschließend mit dem anderen Bereich gearbeitet.

Gemäß einer weiteren Ausführung der Erfindung nimmt die Teilung vom ersten Abschnitt zumindest zu einem der anderen Abschnitte hin kontinuierlich ab.

Alternativ oder zusätzlich hierzu kann die Schränkung vom ersten Abschnitt zumindest zu einem der anderen Abschnitte hin kontinuierlich schmaler werden.

Auf diese Weise wird ein allmählicher Übergang vom Arbeiten mit feiner Teilung bzw. schmaler Schränkung, d.h. von einem Arbeiten mit relativ langsamem Vorschub mit höherer Präzision zu einem nachfolgenden Arbeiten mit größerer Teilung bzw. größerer Schränkung ermöglicht, so daß sich dem Benutzer des Sägeblattes eine optimale Variationsmöglichkeit bietet.

Dagegen ist es natürlich möglich, den ersten Abschnitt durchgehend mit einer anderen Teilung bzw. Schränkung zu versehen als einen der anderen Abschnitte.

Darüber hinaus können weitere Abschnitte der Schneide hinzukommen, bei denen die Teilung bzw. Schränkung weiter variiert ist, wobei es sich im allgemeinen um Zwischenwerte zwischen benachbarten Abschnitten handelt.

Gemäß einer weiteren Ausführung der Erfindung erstreckt sich zumindest der erste Abschnitt der Schneide tangential zur Befestigungsaufnahme.

Durch eine solche Form wird ein Arbeiten in räumlich eng begrenzten Verhältnissen ermöglicht, um beispielsweise einen Sägevorgang entlang einer Wand oder Bodenfläche durchzuführen.

Hierbei können der zweite und ein dritter Abschnitt zumindest teilweise zum ersten Abschnitt hin abgewinkelt sein, um so die Vibrationen während des Arbeitens etwas zu verringern.

Gemäß einer weiteren Ausführung der Erfindung ist die Schneide als Doppelschneide mit zwei voneinander beabstandeten Zahnreihen ausgebildet.

In einer Weiterbildung dieser Ausführung schließen beide Zahnreihen mit jeder der beiden Außenoberflächen des Sägeblattes bündig ab.

Mit einer derartigen Ausführung läßt sich ein besonders sauberer Schnitt erzielen, wobei über einen Zwischenraum zwischen den beiden Zahnreihen eine Spanabfuhr gewährleistet werden kann.

Bei einer solchen Ausführung wird vorzugsweise der Abstand zwischen den beiden Zahnreihen konstant gehalten und lediglich die Teilung im mittleren Abschnitt bzw. den Seitenabschnitten in der gewünschten Weise angepaßt.

Es versteht sich, daß die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Ansicht einer ersten Ausführung eines erfindungsgemäßen Sägeblattes in Form eines Segmentsägeblattes;
- Fig. 2: eine Ansicht einer weiteren Ausführung eines erfindungsgemäßen Segmentsägeblattes;
- Fig. 3: eine Aufsicht einer weiteren Ausführung eines erfindungsgemäßen Sägeblattes mit einer länglichen Form;
- Fig. 4: einen Teil-Querschnitt durch eine weitere Ausführung eines Sägeblattes im Bereich seiner Zähne;
- Fig. 5: einen weiteren Teil-Querschnitt durch eine weitere Abwandlung eines Sägeblattes im Bereich seiner Zähne;
- Fig. 6: eine Aufsicht einer Abwandlung der Ausführung gemäß Fig. 3 und
- Fig. 7: eine weitere Abwandlung des Sägeblattes mit kreisförmiger Grundform in der Aufsicht.

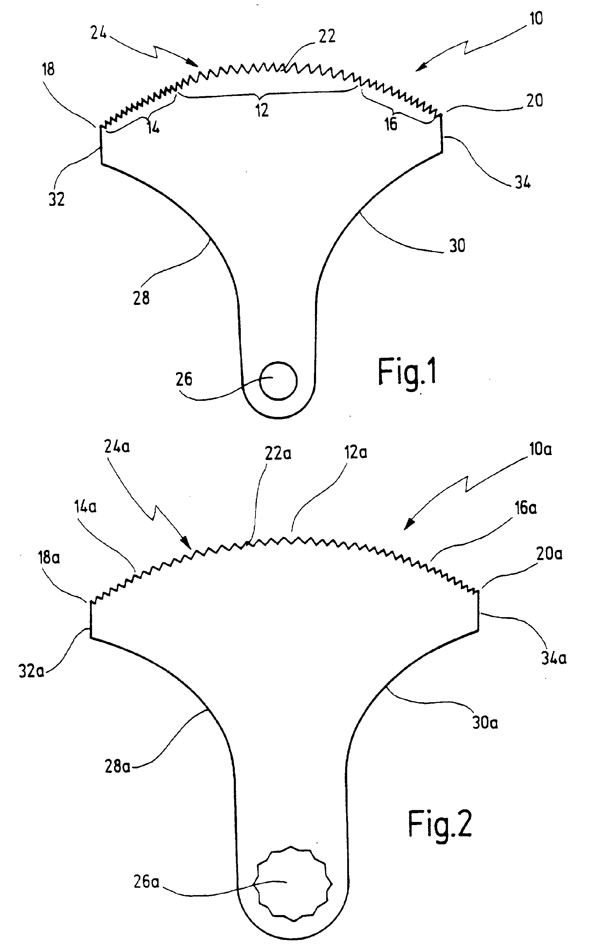

In Fig. 1 ist ein erfindungsgemäßes Sägeblatt in Form eines Segmentsägeblattes in der Aufsicht dargestellt und insgesamt mit der Ziffer 10 bezeichnet. Das Sägeblatt 10 besitzt eine Befestigungsaufnahme 26 in Form einer Öffnung, mittels derer es an einer oszillierend antreibbaren Antriebswelle eines Oszillationsantriebes bekannter Bauart z.B. mit Hilfe einer Mutter oder dergleichen befestigt werden kann. Das Sägeblatt 10 besitzt eine Schneide 24, die kreisbogenförmig ausgeführt ist und deren Krümmungsmittelpunkt durch die Befestigungsaufnahme 26 verläuft. Wird das Sägeblatt 10 somit mittels eines Drehoszillationsantriebes um die Befestigungsaufnahme 26 hin- und heroszillierend angetrieben, so bewegen sich sämtliche Punkte auf der Oberfläche der Schneide 24 auf einem Kreisbogen, so daß ein vibrationsarmes Arbeiten ermöglicht wird.

Das Sägeblatt 10 besitzt eine ebene Fläche und geht ausgehend von der Befestigungsaufnahme 26 über zwei konkav gekrümmte Seitenkanten 28, 30 und sich daran anschließende kurze gerade Seitenkantenabschnitte 32 bzw. 34 in die gekrümmte Schneide 24 über. In der Aufsicht gemäß Fig. 1 besitzt das Sägeblatt 10 somit eine etwa pilzförmige Form.

Die Schneide 24, die aus einer Vielzahl von einzelnen Sägezähnen 22 besteht, besitzt einen ersten, mittleren Abschnitt 12, einen zweiten Abschnitt 14 und einen dritten Abschnitt 16, die sich als Seitenabschnitte 14, 16 auf der einen bzw. der anderen Seite des ersten Abschnittes 12 anschließen und in einem ersten Ende 18 bzw. einem zweiten Ende 20 jeweils am Übergang zu den geraden Seitenkantenabschnitten 32 bzw. 34 enden.

Entlang des zweiten und des dritten Abschnittes 14, 16 sind die Sägezähne 22 mit einem geringeren Abstand zueinander, also mit einer kleineren Teilung, angeordnet als im ersten Abschnitt 12.

Es versteht sich, daß die Darstellung in Fig. 1 lediglich beispielhafter Natur ist und lediglich eine der verschiedenen möglichen Ausführungen schematisch andeutet. Die Größe der dargestellten Zähne 22 und auch die im ersten Abschnitt 12 und in den beiden anderen Abschnitten 14, 16 verwendete Teilung muß nicht den tatsächlichen Größenverhältnissen entsprechen und kann an das jeweils zu sägende Material angepaßt werden. So kann auch die Teilung der Abschnitte 14, 16 gleich 0 werden, d.h. die Abschnitte 14, 16 sind al glatte Messer ausgebildet oder mit Wellenschliff versehen.

Bei härteren und zäheren Materialien, wie etwa Metallen, werden im allgemeinen sowohl im ersten Abschnitt 12 als auch in den beiden anderen Abschnitten 14, 16 kleinere Zähne 22 und grundsätzlich geringere Teilungen als etwa bei einem Sägeblatt verwendet, das zur Bearbeitung von Holz oder Kunststoff vorgesehen ist. Des weiteren können natürlich auch die Winkelbereiche variiert werden. Während bei der in Fig. 1 dargestellten Ausführung sich der erste Abschnitt ausgehend von der Befestigungsaufnahme 26 über einen Winkel von etwa 40° erstreckt und die beiden Abschnitte sich jeweils über einen Winkel von etwa 20° erstrecken, können auch diese Verhältnisse je nach dem gewünschten Anwendungsbereich entsprechend angepaßt werden.

Des weiteren ist es möglich, statt eines mittleren Abschnittes 12 mit gleichbleibender Teilung bzw. Schränkung und der beiden seitlichen Abschnitten 14, 16 auch lediglich einen der beiden seitlichen Abschnitte 14, 16 abweichend vom mittleren Abschnitt 12 zu gestalten. Dies wäre sinnvoll, wenn beispielsweise das betreffende Sägeblatt immer von einer Seite heraus angesetzt werden soll und sodann anschließend überwiegend mit dem übrigen Bereich gearbeitet werden soll.

Mit der in Fig. 1 dargestellten Ausführung wird ein leichtes und genaues Ansetzen und ein einfacher Schnittbeginn an einem der beiden seitlichen Abschnitte 14, 16 ermöglicht, während anschließend zwecks eines höheren Vorschubes dann in der Regel mit dem mittleren oder ersten Abschnitt 12 gearbeitet wird.

Es versteht sich, daß darüber hinaus statt einer Aufteilung in einen mittleren Abschnitt und zwei seitliche Abschnitte auch weitere Abschnitte vorgesehen sein können, innerhalb derer etwa die Teilung weiter variiert wird, vorzugsweise auf einen Zwischenwert zwischen benachbarten Abschnitten.

Bei der Festlegung der Teilung wird zweckmäßigerweise auch die gröbste Teilung so klein gewählt, daß diese kleiner ist als der mit dem Schwenkwinkel des Oszillationsantriebs von z.B. 0,5-5° überstrichene Kreisbogen.

In Fig. 2 ist eine Abwandlung der Ausführung gemäß Fig. 10 dargestellt und insgesamt mit der Ziffer 10a bezeichnet.

Dabei werden für entsprechende Teile entsprechende Bezugsziffern gefolgt von a verwendet. Von der Umrißform her ähnelt die Ausführung gemäß Fig. 2 im wesentlichen der Ausführung gemäß Fig. 1.

Ein erster Unterschied besteht in einer geänderten Form der Aufnahmeöffnung 26a, die als sternförmige Mehrkantöffnung ausgebildet ist, um eine formschlüssige Verbindung mit einem entsprechend geformten Aufnahmestutzen einer Antriebswelle des zugehörigen Oszillationsantriebes zu ermöglichen, wie es grundsätzlich bereits bekannt ist.

Ferner unterscheidet sich die Schneide 24a des Sägeblattes 10a von dem vorstehend beschriebenen Sägeblatt 10 dadurch, daß sich die Teilung der Sägezähne 22a von der Mitte des ersten, mittleren Abschnittes 12a aus zu beiden Enden 18a bzw. 20a hin kontinuierlich verringert.

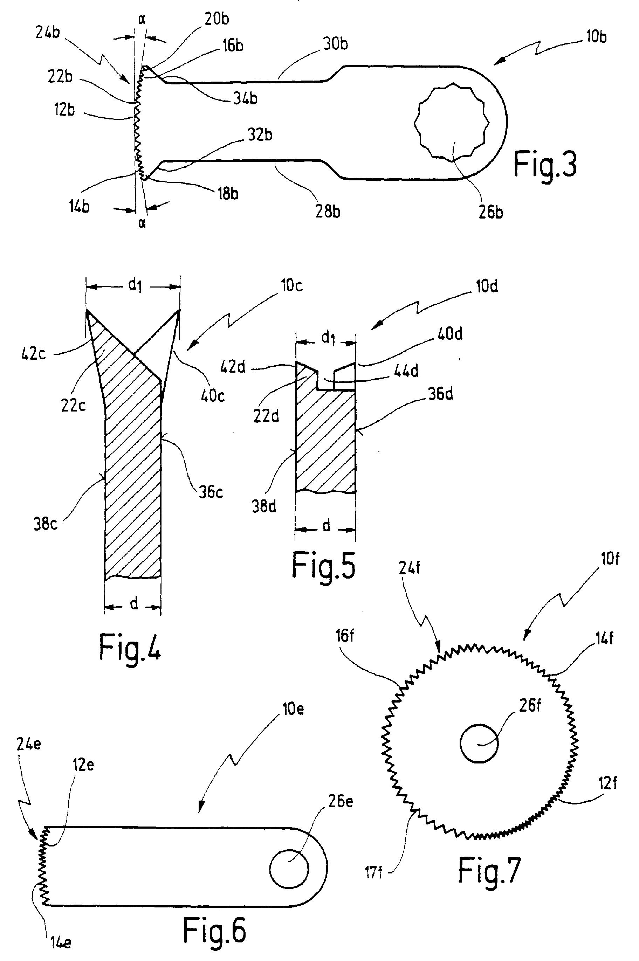

Eine weitere Abwandlung eines erfindungsgemäßen Sägeblattes ist in Fig. 3 dargestellt und insgesamt mit der Ziffer 10b bezeichnet. Auch hierbei werden für entsprechende Teile wiederum entsprechende Bezugsziffern gefolgt von b verwendet.

Das Sägeblatt 10b weist eine längliche Form auf und besitzt ausgehend von der Befestigungsaufnahme 26b zwei zueinander parallele Seitenkanten, die in einem vorderen, von der Befestigungsaufnahme 26b abgewandten Bereich jeweils zur Mitte hin eine Verjüngung bilden, und über schräg nach außen verlaufende kurze gerade Abschnitte 32b bzw. 34b in die Schneide 24b übergehen.

Die Schneide 24b besitzt einen ersten, mittleren, geraden Abschnitt 12b, der tangential zur Befestigungsaufnahme 26b verläuft und an den sich an einer Seite ein zweiter, gerader Abschnitt 14b und an der anderen Seite ein dritter, gerader Abschnitt 16b anschließt, die jeweils in einem kleinen Winkel α von etwa 2 - 10° in den ersten Abschnitt 12b übergehen.

Wiederum ist die Teilung der Sägezähne 22b im Bereich des ersten Abschnitts 12b größer als im Bereich der beiden seitlichen Abschnitte 14b bzw. 16b.

Es versteht sich, daß statt dessen auch der erste Abschnitt 12b sowie die beiden seitlichen Abschnitte 14b, 16b durchgehend geradlinig ausgebildet sein könnten.

In den Figuren 4 und 5 ist eine weitere Variationsmöglichkeit für das erfindungsgemäße Sägeblatt durch Variation der Schränkung erläutert.

In Fig. 4 ist ein Teilschnitt durch ein erfindungsgemäßes Sägeblatt 10c im Randbereich der Sägezähne 22c dargestellt. Das Sägeblatt 10c besitzt zwei Zahnreihen 40c bzw. 42c, die über die eine Außenoberfläche 36c bzw. über die andere Außenoberfläche 38c hinaus hervorstehen. Diese beiden Zahnreihen 40c bzw. 42c spannen zwei Flächen auf, deren Abstand voneinander d₁ beträgt, wie in Fig. 4 dargestellt.

Dieses Maß d₁ ist größer als die Stärke d des Sägeblattes 10c. Die einzelnen Zähne 22c des Sägeblattes 10c stehen abwechselnd über die eine Außenfläche 38c bzw. die andere Außenoberfläche 36c hinaus nach außen hervor.

Bei dem Sägeblatt 10c ist nun die so definierte Schränkung dahingehend variiert, daß im mittleren Bereich des Sägeblattes eine größere Schränkung, also ein größeres Maß d₁ verwendet wird als an den Seitenabschnitten.

Durch eine größere Schränkung wird ein stärkerer Schnitt und ein größerer Vorschub ermöglicht, während mit einer kleineren Schränkung ein saubererer Schnitt mit geringem Vorschub ermöglicht wird. Ist die Schränkung somit in den Seitenabschnitten geringer als im mittleren Abschnitt, so läßt sich das Sägeblatt leichter ansetzen, während anschließend mit dem mittleren Abschnitt zügiger gearbeitet werden kann.

Es versteht sich, daß zusätzlich zur Schränkung gleichzeitig auch die Teilung der Zähne 22c variiert werden kann.

Eine weitere Abwandlung eines erfindungsgemäßen Sägeblattes ist in Fig. 5 als Teilschnitt im Bereich der Sägezähne dargestellt und insgesamt mit der Ziffer 10d bezeichnet.

Wiederum werden für entsprechende Teile entsprechende Bezugsziffern gefolgt von d verwendet.

Das dargestellte Sägeblatt 10d zeichnet sich dadurch aus, daß in Abweichung von der in Fig. 4 dargestellten Ausführungsform zwei voneinander beabstandete Zahnreihen 40d bzw. 42d vorgesehen sind, zwischen denen in der Mitte ein Zwischenraum 44d gebildet ist. Die beiden Zahnreihen 40d und 42d sind so gestaltet, daß sie nach außen hin jeweils bündig mit den Außenoberflächen 36d bzw. 38d abschließen.

Auf diese Weise wird ein besonders sauberer Schnitt ermöglicht, da der Abstand d₁ der Zähne 22d der Stärke d des Sägeblattes 10d entspricht.

Bei einer solchen Ausführung wird also naturgemäß nicht die Schränkung variiert, sondern lediglich die Teilung entlang der Schneide.

Eine Abwandlung der Ausführung gemäß Fig. 3 ist in Fig. 6 dargestellt und insgesamt mit der Ziffer 10e bezeichnet.

Auch dieses Sägeblatt besitzt eine längliche Grundform mit einer Befestigungsaufnahme 26e an einem Ende und einer Schneide 24e am anderen Ende. Jedoch ist die Befestigungsaufnahme 26e nicht als Mehrkantöffnung, sondern als kreisförmige Öffnung ausgeführt. Die Schneide 24e ist kreisbögenförmig und besitzt nur zwei Abschnitte, 12e, 14e, von deren der erste 12e eine feinere Teilung als der zweite Abschnitt 14e aufweist.

Eine weitere Abwandlung des erfindungsgemäßen Sägeblattes ist in Fig. 7 dargestellt und insgesamt mit der Ziffer 10f bezeichnet.

Hierbei weist das Sägeblatt 10f eine kreisförmige Grundform auf und ist an seinem Rand mit der Schneide 24f versehen. Die Schneide weist vier Abschnitte 12f, 14f, 16f, 17f auf, die mit Sägezähnen unterschiedlicher Teilung versehen sind. Dabei schließt sich vorzugsweise an den Abschnitt 12f mit der kleinsten Teilung ein Abschnitt 14f mit einer etwas größeren Teilung an, gefolgt von einem Abschnitt 16f mit einer noch größeren Teilung, woran sich der Abschnitt 17f mit der größten Teilung anschließt, der an den ersten Abschnitt 12f der feinsten Teilung angrenzt.

Je nach dem zu bearbeitenden Material bzw. der gewünschten Feinheit des Schnittes werden die geeigneten Abschnitte 12f, 14f oder 17f bei der Bearbeitung nacheinander verwendet.

## Patentansprüche

1. Sägeblatt mit einer Befestigungsaufnahme (26, 26a, b, e, f) zur Befestigung an einer oszillierend antreibbaren Antriebswelle, mit einer von der Befestigungsaufnahme (26, 26a, b, e, f) beabstandeten Schneide (24, 24a, b, e, f), die sich im wesentlichen tangential oder bogenförmig zu der Befestigungsaufnahme (26, 26a, b, e, f) erstreckt und mit einer Mehrzahl von Sägezähnen (22, 22a, b, c, d) versehen ist, wobei die Schneide (24, 24a, b, e, f) wenigstens einen ersten Abschnitt (12, 12a, b, e, f) und einen zweiten Abschnitt (14, 14a, b, e, f) aufweist, **dadurch gekennzeichnet, daß** die Sägezähne (22, 22a, b, c, d) zumindest im Bereich des ersten Abschnittes (12, 12a, b, e, f) eine andere Teilung oder eine andere Schränkung als im zweiten Abschnitt (14, 14a, b, e, f) aufweisen.

2. Sägeblatt nach einem der vorhergehenden Ansprüche, **dadurch gekennzeichnet, daß** die Schneide (24, 24a, e, f) kreisbogenförmig gekrümmt ist und einen Krümmungsmittelpunkt aufweist, der mit der Befestigungsaufnahme (26, 26a, e, f) zusammenfällt.

3. Sägeblatt nach Anspruch 1, **dadurch gekennzeichnet, daß** das Sägeblatt (10b, 10e) eine längliche Grundform aufweist, wobei die Befestigungsaufnahme (26b, e) im Bereich eines ersten Endes ausgebildet ist und die Schneide (24b, e) am gegenüberliegenden zweiten Ende ausgebildet ist.

4. Sägeblatt nach einem der vorhergehenden Ansprüche, **dadurch gekennzeichnet, daß** die Schneide (24b, 24f) mehr als zwei Abschnitte aufweist, von denen wenigstens zwei eine voneinander abweichende Teilung oder Schränkung aufweisen.

5. Sägeblatt nach einem der vorhergehenden Ansprüche, **dadurch gekennzeichnet, daß** die Schneide (24b) einen ersten, einen zweiten und einen dritten Abschnitt (12a, 14b, 16b) aufweist, wobei der erste Abschnitt (12b) als mittlerer Abschnitt ausgebildet ist, der auf beiden Seiten von dem zweiten (14b) und dem dritten Abschnitt (16b) eingeschlossen ist.

6. Sägeblatt nach einem der vorhergehenden Ansprüche, **dadurch gekennzeichnet, daß** die Sägezähne (22, 22a, b, d) eines Abschnitt (12, 12a, b, e, f) eine feinere Teilung als an einem der anderen Abschnitte (14, 14a, b, e, f, 16f, 17f) aufweisen.

7. Sägeblatt nach einem der vorhergehenden Ansprüche, **dadurch gekennzeichnet, daß** die Sägezähne (22 c) eines Abschnittes eine schmalere Schränkung als an einem der anderen Abschnitte aufweisen.

8. Sägeblatt nach einem der vorhergehenden Ansprüche, **dadurch gekennzeichnet, daß** die Teilung von einem der Abschnitte (12a) zumindest zu einem der anderen Abschnitte (14a, 16a) hin kontinuierlich abnimmt.

9. Sägeblatt nach einem der vorhergehenden Ansprüche, **dadurch gekennzeichnet, daß** die Schränkung von einem der Abschnitte zumindest zu einem der anderen Abschnitte hin kontinuierlich schmaler wird.

10. Sägeblatt nach einem der Ansprüche 5 bis 9, **dadurch gekennzeichnet, daß** sich der erste Abschnitt (12b) der Schneide (24b) tangential zur Befestigungsaufnahme (26b) erstreckt.

11. Sägeblatt nach Anspruch 10, **dadurch gekennzeichnet, daß** der zweite und der dritte Abschnitt (14b, 16b) zumindest teilweise zum ersten Abschnitt (12b) hin abgewinkelt sind.

12. Sägeblatt nach einem der vorhergehenden Ansprüche, **dadurch gekennzeichnet, daß** die Schneide als Doppelschneide mit zwei voneinander beabstandeten Zahnreihen ausgebildet ist.

13. Sägeblatt nach Anspruch 12, **dadurch gekennzeichnet, daß** die beiden Zahnreihen mit jeder der beiden Außenoberflächen (36d, 38d) des Sägeblattes (10d) bündig abschließen.
